## Europäisches Patentamt
## European Patent Office
## Office européen des brevets

(11) Veröffentlichungsnummer: **0 116 823**
**B1**

(12) # EUROPÄISCHE PATENTSCHRIFT

(45) Veröffentlichungstag der Patentschrift:
02.09.87

(51) Int. Cl.⁴: **G 10 K 11/00**

(21) Anmeldenummer: **84100061.5**

(22) Anmeldetag: **04.01.84**

(54) **Ultraschallwandler.**

(30) Priorität: **20.01.83 DE 3301848**

(43) Veröffentlichungstag der Anmeldung:
**29.08.84 Patentblatt 84/35**

(45) Bekanntmachung des Hinweises auf die Patenterteilung:
**02.09.87 Patentblatt 87/36**

(84) Benannte Vertragsstaaten:
**DE FR GB IT**

(56) Entgegenhaltungen:
**FR-A-2 325 266**
**GB-A-2 063 007**
**US-A-3 427 481**
**US-A-3 950 660**
**US-A-4 326 274**

(73) Patentinhaber: **Siemens Aktiengesellschaft Berlin und München, Wittelsbacherplatz 2, D-8000 München 2 (DE)**

(72) Erfinder: **Forster, Alfred, Nariskerstrasse 3, D-8460 Schwandorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen im Abstand vom zu messenden Gegenstand angeordneten Ultraschallwandler mit einem plattenförmigen, von einem Beschwerungsring umgebenen Keramikschwinger an dem Metallelektroden befestigt sind und an dessen einer Stirnseite eine $\lambda/4$-Anpaßschicht aus Kunststoff vorhanden ist.

Der vorliegenden Erfindung liegt die Aufgabe zugrunde, die Ausschwingdämpfung - hierunter wird die Dämpfung der mechanischen Schwingungen des Wandlers unmittelbar (zeitlich) nach dem Senden verstanden - bei bekannten Ultraschallwandlern der obengenannten Art (DE-A- 25 37 788, 25 41 492) zu verbessern, ohne dabei das weitere Übertragungsverhalten wesentlich zu verschlechtern. Das Einbetten der Wandler in Gummischellen bzw. in Silikonvergußmassen oder aber auch elektrische Maßnahmen, wie z. B. das Vorsehen von Dämpfungswiderständen, Transistoren etc. hat nicht die genügende Ausschwingdämpfung gebracht. Hierbei wird darüber hinaus nicht nur das Ausschwingen gedämpft, sondern auch in erheblichem Maße des Übertragungsmaß, d.h. das Verhältnis von Sende- zu Empfangssignal wurde erheblich reduziert. Die vorliegende Erfindung löst die vorgegebene Aufgabe bei einem Ultraschallwandler der obengenannten Art auf einfache Weise dadurch, daß der gesamte Ultraschallwandler ohne die dem zu beschallenden Medium zugewandte Seite der Anpaßschicht mit einer Schaumumhüllung versehen ist, die aus Polyurethanschaum besteht. Es ist an sich bekannt (US-A- 3 969 927), zum Messen mechanischer Vibrationen den Piezoschwinger starr mit dem zu messenden Objekt zu verbinden und die Oberfläche einer dem zu messenden Objekt abgelegenen Elektrode mit einer Schicht aus flexiblem, schallabsorbierendem Material zu belegen, beispielsweise Polyurethanschaum. Diese Anordnung ist somit nicht für das Medium Luft, d.h. für im Abstand angeordnete, zu messende Objekte verwendbar. Es fehlt generell die Anpaßschicht und der Beschwerungsring.

Mit der erfindungsgemäßen Ausführung wurden Ausschwingdämpfungen > 20 dB erreicht, wobei lediglich ein Übertragungsmaßverlust von < 3 dB zu verzeichnen war. Hierdurch ist es möglich geworden, den Minimalabstand Wandler - zu messender Gegenstand wesentlich zu reduzieren, ohne dabei wesentlich an erreichbarem Maximalabstand zu verlieren.

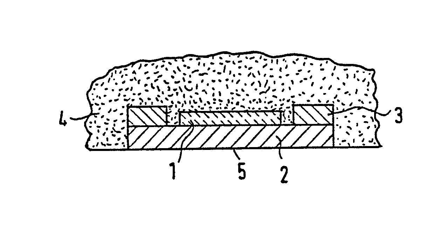

Anhand der Zeichnung wird ein Ausführungsbeispiel gemäß der Erfindung beschrieben.

Der in der Zeichnung dargestellte Ultraschallwandler besteht aus dem Keramikschwinger 1, der Anpaßschicht 2, der die $\lambda/4$-Schicht entspricht, und einem Beschwerungsring 3 aus Aluminium. Der Beschwerungsring 3 schließt in den äußeren Abmessungen mit der Anpaßschicht 2 ab. Der Keramikschwinger liegt im Inneren des Beschwerungsringes 3, ohne diesen zu berühren. Der genaue Aufbau und auch die Herstellung der Anpaßschicht 2, die beispielsweise aus einer Mischung von Polysterollack mit Hohlkugeln aus Siliziumdioxyd bestehen kann, sind in den obengenannten Patentschriften näher erläutert. Der so aufgebaute Ultraschallwandler wird gemäß der Erfindung von einer Schaumumhüllung 4 umgeben. Die Fläche 5 der Anpaßschicht 2 bleibt hierbei frei von der Schaumumhüllung 4. Dadurch, daß lediglich der Außenmantel des Ultraschallwandlers und die eine Seite mit der Schaumumhüllung versehen ist, ist der Schallaustritt nicht nachteilig beeinflußt. Es läßt sich aber, wie bereits erwähnt, eine gute Ausschwingdämpfung auf einfache Weise erreichen; denn die Schaumumhüllung, wenn sie beispielsweise aus Polyurethanschaum hergestellt wird, kann gleichzeitig als Gehäusebefestigungsmittel benutzt werden.

## Patentansprüche

1. Im Abstand vom zu messenden Gegenstand angeordneter Ultraschallwandler mit einem plattenförmigen, von einem Beschwerungsring (3) umgebenen Keramikschwinger (1) an dem Metallelektroden befestigt sind und an dessen einer Stirnseite eine $\lambda/4$-Anpaßschicht aus Kunststoff vorhanden ist, dadurch gekennzeichnet, daß der gesamte Ultraschallwandler ohne die dem zu beschallenden Medium zugewandte Seite der Anpaßschicht (2) mit einer Schaumumhüllung (4) versehen ist, die aus Polyurethanschaum besteht.

## Claim

1. An ultrasonic transducer which is arranged at an interval from the object to be measured and which comprises a plate-like ceramic oscillator (1) which is surrounded by a weighting ring (3) and to which metal electrodes are attached, and on one face of which a $\lambda/4$ matching layer consisting of synthetic material is arranged, characterised in that the entire ultrasonic transducer, excluding that side of the matching layer (2) which faces towards the medium which is to be exposed to ultrasonic waves, is provided with a foam casing (4) composed of polyurethane foam.

**Revendication**

1. Transducteur ultrasonore disposé à distance d'un objet à mesurer, comprenant un oscillateur céramiqe (1) en forme de plaqe, entouré d'un anneau d'alourdissement (3), auquel sont fixées des électrodes métalliques et sur l'une des faces duqel est disposée une couche d'adaptation quart d'onde en matière synthétique, caractérisé en ce que l'ensemble du transducteur ultrasonore, exception faite du côté de la couche d'adaptation (2) dirigé vers le milieu à soumettre aux ultrasons, est pourvu d'un enrobage de matière alvéolaire (4) en mousse de polyuréthane.